# DEMANDE DE BREVET EUROPEEN

(11) **EP 1 449 876 A1**
(43) Date de publication de la demande: **25.08.2004**
(21) Numéro de dépôt: 03100409.6
(22) Date de dépôt: 20.02.2003
(51) Int. Cl.: C08L 23/04, C08L 23/28, C08J 9/00

(54) **Mousse de polyoléfines ultra-flexible contenant du CPE**

(71) Demandeur: NMC S.A., 4731 Raeren/Eynatten (BE)
(72) Inventeur: Job, Denis, 4031 Angleur (BE); Mayeres, Jean-Pierre, 4700 Eupen (BE)
(74) Mandataire: Kihn, Pierre Emile Joseph

(57) **Abrégé**

La présente invention concerne une mousse comprenant un mélange de:
a) 5 à 85% d'un homopolymère d'éthylène et/ou d'un copolymère fabriqué par un procédé à haute pression ; ou de leurs mélanges ;
b) de 5 à 85% d'un homopolymère d'éthylène et/ou d'un copolymère souple d'éthylène fabriqué par un procédé à haute pression ou de leurs mélanges, distinct(s) de celui (ceux) désigné(s) au point a) en ce qu'il(s) doit (doivent) avoir un point de fusion DSC inférieur d'au minimum 5°C à celui du (des) polymère(s) du point a)
c) de 5 à 85% de polyéthylène chloré possédant un taux de chlore allant de 10 à 60%.

## Description

La présente invention concerne des mousses de polyoléfines ultraflexibles.

Ce type de mousse peut trouver son utilité en tant que comme joint d'étanchéité entre deux matériaux dont les surfaces sont irrégulières.

Dans des projets d'étanchéification, on souhaite disposer d'un matériau pouvant constituer une barrière à l'humidité. Ce matériau doit pouvoir être disponible sous forme de profil en continu, de forme variable, et doit posséder une bonne flexibilité ainsi qu'une excellente imperméabilité à l'eau. Si on dispose d'un tel matériau, le fait qu'il soit moussé apporte des avantages en terme de prix et de flexibilité. D'une manière générale, le matériau moussé sera placé (par collage ou soudage) sur une surface rigide, aux formes pouvant être irrégulières, et on viendra presser sur la surface sur laquelle le joint a été appliqué un substrat, écrasant partiellement le joint, afin de réaliser un cloisonnage étanche. Il peut s'agir, par exemple, de panneaux constitutifs d'un toit ou de murs. Si la pose doit pouvoir se faire manuellement, la force que l'on est capable d'exercer sur le joint de mousse est limitée. Si le joint est trop rigide, la force nécessaire pour l'écraser d'une manière régulière entre la surface et le substrat apposé par la suite sera insurmontable.

Les joints en mousse à cellules ouvertes très flexibles connus et qui sont adaptés à l'utilisation décrite plus haut sont généralement de nature composite: il s'agit par exemple de mousse à cellules ouvertes ayant une porosité accessible en surface, donc sans peau extérieure, très flexibles, en polyuréthane, polyester ou polyéther, et qui contiennent un liquide de forte viscosité rendant plus difficile le passage de l'humidité. Le joint est livré sous précontrainte dans une gaine en matière plastique, qui est retirée au moment de l'application. Le coût de ces joints composites est élevé, de par la nature des polymères employés pour la mousse, par l'emploi d'un liquide spécifique pour l'imperméabilisation et à cause du conditionnement du joint.

Une solution technique à ce problème est proposée par l'utilisation de joints en matériaux moussés possédant des cellules ouvertes et comportant une peau imperméable. De telles mousses, obtenues par un procédé d'extrusion en continu, sont décrites dans le brevet EP 405103 respectivement dans le brevet US 4,931,484. Elles sont constituées de polyéthylène homopolymère, de copolymères souples de polyéthylène ou de leurs mélanges. Parmi les homopolymères, le polyéthylène basse densité est préféré; parmi les copolymères éthyléniques souples, on mentionne l'EVA, l'EMA, l'EEA, l'EAA. L'EVA constitue le copolymère souple éthylénique préféré. La structure bimodale des cellules (ouvertes ou fermées) est obtenue en extrudant les compositions au moins à 5°C au-dessus de la température donnant lieu à une mousse à cellules majoritairement fermées. Les mousses ainsi obtenues présentent des propriétés mécaniques exprimées sous forme de limite supérieure de compressibilité, à savoir 68947 N/m² ou moins à 50% de déformation, selon un projet de norme ASTM « Specification for Backer Material for Use With Cold and Hot applied Joint Sealants Used with Portland Cement Concrete and Asphalt Pavement Joints ». Les exemples cités dans ces références décrivent des mousses caractérisées par une compression de minimum 19994.6 N/m² à 50% de déformation. La structure cellulaire est qualifiée soit de taille « moyenne », soit « fine mais avec quelques grosses cellules présentes au coeur ».

Cependant, les mousses décrites dans les brevets EP 405103, ou US 4931484, ne possèdent pas la souplesse nécessaire pour les applications où une pression raisonnable doit pouvoir être exercée sans l'aide de machines ou de ressources humaines importantes, pour comprimer la mousse entre deux parois, par exemple dans les situations de placement manuel décrites précédemment.

Le but de la présente invention est de réaliser des mousses qui sont bien plus flexibles que celles de l'état de l'art.

Ce but est atteint par une mousse comprenant un mélange de:
a) 5 à 85% d'un homopolymère d'éthylène et/ou d'un copolymère souple d'éthylène fabriqué par un procédé à haute pression ; ou de leurs mélanges
b) 5 à 85% d'un homopolymère d'éthylène et/ou d'un copolymère souple d'éthylène fabriqué par un procédé à haute pression distinct(s) de celui (ceux) désigné (s) au point a) en ce qu'il(s) doit (doivent) avoir un point de fusion DSC inférieur d'au minimum 5°C à celui du (des) polymère(s) du point a),
c) 5 à 85% de polyéthylène chloré possédant un taux de chlore allant de 10 à 60%.

Par homopolymère d'éthylène on entend les polymères fabriqués à base d'éthylène notamment le polyéthylène haute densité (HDPE), le polyéthylène basse densité (LDPE), le polyéthylène linéaire basse densité (LLDPE). L'homopolymère d'éthylène préféré est le polyéthylène basse densité (LDPE), ayant préférentiellement un Melt Flow index de 0.2 à 20, préférentiellement de 0.7 à 8.

Les copolymères souples de l'éthylène fabriqués par un procédé à haute pression sont tous ceux synthétisés sous haute pression, par exemple de l'éthylène acrylate d'éthyle (EEA), éthylène acide acrylique (EAA), éthylène acide méthacrylique (EMAA), éthylène acétate de vinyle (EVA), éthylène acrylate de butyle (EBA), éthylène acrylate de méthyle (EMA). Le Melt Flow Index de ces copolymères peut varier de 0.2 à 25, préférentiellement de 0.7 à 8. L'EVA, l'EBA, l'EMA sont préférentiellement utilisés. Si en outre une résistance en température supérieure est recherchée, on peut partir d'un homopolymère et/ou d'un copolymère éthylènique modifiés par greffage au silane, en combinaison avec un catalyseur pour la réticulation ultérieure de la mousse finale avec l'humidité de l'air ou l'immersion temporaire dans l'eau.

Un des avantages de ces mousses est qu'elles comprennent des matières moins onéreuses que les mousses composites sans peau externe actuellement disponibles. Les mousses selon l'invention possèdent naturellement une peau externe imperméable à l'eau.

Il a été trouvé, de manière inattendue, qu'en ajoutant du polyéthylène chloré à des compositions comprenant a) un homopolymère d'éthylène ET/OU un copolymère souple d'éthylène comme par exemple l'EVA, l'EMA, l'EBA, l'EEA, l'EAA et assimilés et b) un polymère distinct de ceux désignés au point a) en ce qu'il doit avoir un point de fusion DSC inférieur d'au minimum 5°C (de préférence 10°C) à celui du copolymère du point a), on obtient une nouvelle sorte de mousse à cellules ouvertes possédant une souplesse inégalée, aidée en cela par une structure cellulaire particulièrement fine et régulière par rapport à l'état de l'art.

Les valeurs de compression sont divisées au moins par deux par rapport à celles obtenues avec des mousses représentatives des précédents brevets EP 405103, respectivement US 4931484.

Bien que mentionnant l'utilisation de « copolymères souples d'éthylène », les précédents brevets EP 405103, respectivement US 4931484, ne suggèrent pas l'utilisation concomitante de CPE. En effet, les copolymères souples cités dans les précédentes références sont des copolymères issus de la polymérisation en procédé haute pression radicalaire de monomère éthylène et de co-monomères variés (par exemple l'acétate de vinyle, l'acétate d'éthyle, l'acrylate de butyle, l'acide acrylique), donnant lieu à des chaînes principales ayant de nombreuses branches de type long. Cette morphologie est très favorable au moussage par gazage direct, car l'existence des longues branches entraîne un phénomène de durcissement élongationnel aux hautes déformations, ce qui améliore grandement la tenue à l'état fondu du polymère (le « Melt Strength »), et par la même occasion sa moussabilité (possibilité d'atteindre des basses densités). Or, les CPE ne bénéficient pas de cette structure de longues branches latérales, car ils sont synthétisés à partir de HDPE, ayant une structure fortement linéaire et exempte de branchement de type long. Le HDPE est traité avec du chlore dans un procédé en suspension, au cours duquel on ajoute des nucléateurs de croissance et des agents anti-mottant: talc, carbonate de calcium, stéarate de calcium. Le CPE est délivré sous forme de poudre qui ne se compacte pas grâce aux agents anti-mottant. Les taux de chlore peuvent aller de 10 à 60% selon les applications.

Pour expliquer les résultats surprenant obtenus, et ce malgré la structure des chaînes non branchées du CPE, on peut proposer l'explication suivante: la combinaison du polyéthylène chloré avec des polymères branchés de type homopolymère ou copolymères basés sur l'éthylène, est rendue possible par la compatibilisation due à la présence de groupements éthylène dans le CPE. La moussabilité du CPE est ainsi supportée, et la flexibilité du CPE, résultant du chlore introduit de manière principalement atactique, améliore grandement la souplesse de la mousse. Enfin, la finesse et la régularité exceptionnelles des cellules obtenues améliorent encore les qualités mécaniques. Sur ce dernier point, il semblerait que les additifs incorporés au cours de la chloration du HDPE étant idéalement dispersés et compatibilisés dans ce procédé unique de fabrication, ils confèrent au CPE ce pouvoir nucléant particulier lors du moussage, permettant l'obtention de cellules très fines et régulières, ce que ne permet pas de manière aisée l'usage de nucléants apportés à posteriori à des compositions exemptes de CPE.

La mousse comprend avantageusement entre 10 à 50% de polyéthylène chloré et de préférence entre 20 à 40% de polyéthylène chloré.

Le polyéthylène chloré (CPE) aura avantageusement entre 10 et 50 % de chlore, de manière préférée de 20 à 40% de chlore, ou de manière particulièrement préférée de 30 à 36% de chlore. La viscosité (DIN 54811-A/ISO/DIS 11443, 145s⁻¹, 190°C) du CPE peut varier de 500 Pa.s à 2500 Pa.s, préférentiellement on choisira une viscosité de 700 Pa. S à 1500 Pa.s.

Selon un mode de réalisation préféré, le mélange peut comprendre en outre entre 5 et 95 % de polyéthylène métallocène.

D'une manière plus avantageuse, on utilisera de 15 à 50% de polyéthylène métallocène.

Le polyéthylène métallocène aura de préférence une densité inférieure ou égale à 915 kg/m3.

Selon un mode de réalisation particulièrement préféré, le mélange comprendra de 30 à 45 % de polyéthylène métallocène ayant une densité inférieure ou égale à 915 kg/m3.

Les polyéthylènes métallocènes qui peuvent être utilisés ont une densité comprise entre 860 kg/m³ et 915 kg/m³, ce qui leur confère des propriétés élastomèriques (allongement à la rupture particulièrement élevé, supérieur à celui des copolymères de l'éthylène de type radicalaire). Les co-monomères possibles sont le butène C₄, l'hexène C₆, l'octène C₈. La quantité et la répartition du co-monomère agissent sur la densité du polyéthylène métallocène et sur les propriétés thermo-mécaniques. Les polyéthylènes métallocènes EXACT (EXXONMOBIL, co-monomère C₄, C₆ ou C₈), ENGAGE (Dupont Dow, co-monomère C₈) peuvent être utilisés.

Par rapport aux copolymères radicalaires de l'éthylène fabriqué selon un procédé de haute pression (procédé radicalaire) (EVA, EBA, EMA, EAA,...), les polyéthylènes métallocènes de densité inférieure ou égale à 915 kg/m³ possèdent des caractéristiques mécaniques avantageuses, notamment une souplesse supérieure. Comme les exemples le montrent, les mousses fabriquées requièrent une contrainte de compression très faible.

Pour régulariser d'avantage la structure cellulaire, on peut employer des agents nucléants. Cependant, l'utilisation de nucléants « passifs », comme par exemple le talc, le carbonate de calcium, la silice ou le stéarate de calcium, ne donnent pas - dans certaines conditions - une structure cellulaire suffisamment homogène: il subsiste parfois des cellules exagérément grosses au coeur de la mousse, là où le flux est le plus chaud, ce qui favorise le phénomène de coalescence. Par contre, il a été trouvé que l'utilisation d'agents nucléants « actifs », comme les combinaisons de bicarbonate de soude et/ou d'acide citrique disponibles sur le marché (« HYDROCEROL » de CLARIANT, « SAFOAM » de REEDY, « TRACEL » de TRAMACO,... et apparentés), qui libèrent du gaz en se décomposant sous l'action de la température lors de la mise en oeuvre, permet de minimiser encore d'avantage ce phénomène et d'obtenir une structure cellulaire particulièrement fine et régulière sur toute la section de la mousse. Ces agents « actifs » sont disponibles sous forme de mélanges maîtres (masterbatch), sur base de la résine adéquate (polyéthylène, copolymère d'éthylène, polyéthylène métallocène,...). De préférence, on utilise conjointement les agents nucléants « passifs » comme ceux précités et des agents nucléants « actifs » pour optimiser la structure cellulaire et le coût de la formulation, les agents nucléants « actifs » étant généralement plus chers que les agents nucléants « passifs ». Le dosage de ces nucléants sera adapté selon la structure cellulaire désirée. On utilisera généralement de 0,1 à 10% en poids d'agents nucléants actifs, incluant ou non les nucléants passifs précédemment définis.

D'autres additifs peuvent être employés afin d'atteindre des propriétés particulières pour la mousse. On peut citer, entre autres, les anti-feu, agents antistatiques, agents stabilisateurs de volume, pigments, absorbeurs-réflecteurs d'infrarouges, anti-UV, antioxydants,...qui sont connus de l'homme de l'art.

On peut également adjoindre des agents améliorant la processabilité : fluoroélastomères, cires de polyoléfines, cires oxydées de polyoléfines,....

Les gaz utilisables pour le moussage en gazage direct sont connus de l'homme de l'art ; il s'agit de manière générale de composés organiques volatiles, ayant un point d'ébullition (à 1 atmosphère) inférieur au point de fusion de la résine de base. Par exemple, les hydrocarbures alcanes, les HFC, le CO₂, les gaz de l'atmosphère (CO₂, N₂, Ar ,...). Parmi ces produits, les alcanes sont les agents gonflant physiques préférés, spécialement les alcanes en C₃ et C₄. Plus particulièrement, l'isobutane est employé.

L'invention concerne également un procédé de fabrication de mousse en extrusion par injection directe de gaz. Ce procédé comprend les étapes suivantes:
a) dosage des constituants, prémélangés ou dosés individuellement, à l'alimentation d'une extrudeuse;
b) plastification du mélange par chauffage à haute température du cylindre et mélange par la vis pour fondre entièrement la masse et l'homogénéiser;
c) injection dans le cylindre d'un gaz de moussage à l'endroit où la viscosité du mélange est la plus appropriée;
d) homogénéisation de la masse + gaz;
e) refroidissement de la masse: dernières zones du cylindre plus froides, section de refroidissement statique, homogénéisation;
f) extrusion à travers une filière, contrôlée en température, ayant une section de forme prédéfinie selon l'application finale de la mousse, la masse subissant une chute importante de pression qui entraîne la formation des bulles de gaz, provoquant la formation de la mousse à l'air libre;
g) refroidissement, étirage et guidage de la mousse.

La mousse extrudée est guidée, par une étireuse pratiquement sans tension, dans une section de refroidissement (air ou eau ou les deux) pour figer la structure désirée.

L'extrudeuse peut être une extrudeuse à simple vis, double vis co-rotative ou contre-rotative.

La température d'extrusion du mélange en filière sera adaptée par l'homme de l'art afin d'obtenir la consistance requise du produit moussé. Cela signifie qu'il faut obtenir une température à la filière plus élevée que la température qui mènerait à la formation de cellules fermées. Le mélange de polymères ayant des points de fusion différents, cela favorise l'obtention de cellules majoritairement ouvertes au sein de la mousse, à une température plus élevée. Cependant, il est conseillé de réaliser une trempe de la surface de la mousse immédiatement après sa sortie de la filière à l'air libre, ceci afin de constituer une couche périmétrique de cellules fermées. Cela permet d'éviter l'effondrement de la masse moussée, qui est plus faible mécaniquement vu la température d'extrusion volontairement plus élevée que pour l'obtention de mousses à cellules majoritairement fermées.

Il est possible de fabriquer des mousses à partir des compositions de la présente invention de formes multiples: profilés ronds, carrés, formes irrégulières concaves ou convexes,.... Il suffit d'extruder le mélange polymères + gaz à travers une filière ayant le design et la forme requis pour donner la forme finale expansée désirée.

Pour des formes creuses, on utilisera un pointeau et une filière afin de réaliser le corps creux, le mélange polymère + gaz contournant le pointeau à l'état fondu, pour se solidifier une fois à l'air libre en se refroidissant.

Toutefois, on a constaté que dans le cas de profils creux et en particulier pour des tubes ronds, les compositions de la présente invention donnent lieu à des mousses tellement souples qu'une fois le tube de mousse formé, il s'effondre sous son propre poids. En diminuant la température de la masse polymère + gaz à la sortie du cylindre, on peut rétablir la rotondité du tube mais les cellules sont alors nettement plus fermées, et l'on perd le bénéfice de ces compositions. Il a été trouvé que, de manière inattendue, en pinçant judicieusement le tube de mousse à l'endroit adéquat de son refroidissement, le tube se stabilise et redevient parfaitement rond. Une explication est proposée, à savoir que le fait d'emprisonner de l'air dans l'intérieur du tube, combiné à la diffusion de l'agent de moussage, maintient une surpression hydrostatique qui s'équilibre en rétablissant la forme naturelle du tube. Une fois la mousse convenablement refroidie, on peut relâcher le pincement et le tube se forme parfaitement.

Les exemples suivants illustrent clairement les propriétés avantageuses des mousses obtenues avec les compositions de la présente invention, par rapport à des mousses ayant des compositions représentatives de l'état de la technique.

### EXEMPLE 1 COMPARATIF:

Une mousse représentative de l'état de la technique cité est obtenue en extrudant le mélange comportant:
□ 70 parts en poids de LDPE (densité 929 kg/m³, MFI=8);
□ 30 parts en poids de résine EVA (MFI=2 g/10min., 18% Vinyl acétate);
□ 2,2 parts en poids d'un masterbatch antistatique à 70% de glycérol monostéarate ATMER 122 (ICI) dans 30% d'EVA;
□ 2 parts en poids d'un masterbatch à 25% de talc dans du LDPE;
□ 0,2 parts en poids de masterbatch de couleur noire.

La mousse est extrudée à travers une filière rectangulaire, à 10kg/h de débit de polymères, avec 1.05 kg d'isobutane /h. La température de la masse polymère + gaz à la sortie du cylindre est de 113°C et la mousse passe dans un anneau soufflant de l'air, placé directement après la formation de la mousse à l'air libre, pour figer la surface extérieure de la mousse. La densité est de 27 kg/m³ et le profil est un rectangle de 14x9mm, comptant ± 250 cellules/cm². Il y a des cellules plus grosses localisées au centre de la mousse. La mousse est à cellules ouvertes avec une peau extérieure et présente une certaine souplesse.

### EXEMPLE 2 COMPARATIF:

Une deuxième mousse représentative de l'état de la technique cité est obtenue en extrudant le mélange comportant:
□ 70 parts en poids de LDPE (densité 929 kg/m³, MFI=8);
□ 30 parts en poids de résine EVA (MFI=2 g/10min., 18% Vinylacétate);
□ 1,5 parts en poids d'un masterbatch lubrifiant à 90% de stéaramide/palmitamide ARMID HT(AKZO) dans 10% d'EVA;
□ 1,5 parts en poids d'un masterbatch à 25% de talc dans du LDPE;
□ 0,5 parts en poids de masterbatch de couleur noire.

La mousse est extrudée à travers une petite filière carrée, à 10kg/h de débit de polymères, avec 1,26 kg d'isobutane /h. La température de la masse polymère + gaz à la sortie du cylindre est de 113,9°C et la mousse passe dans un anneau soufflant de l'air, placé directement après la formation de la mousse à l'air libre, pour figer la surface extérieure de la mousse. La densité est de 27 kg/m³ et le profil est un rectangle de 8x8mm, comptant ± 450 cellules/cm². La mousse est à cellules ouvertes avec une peau extérieure et présente une souplesse améliorée, du fait de la taille cellulaire plus fine en moyenne. Il y a des cellules plus grosses localisées au centre de la mousse.

### EXEMPLE 3:

Une mousse de composition nouvelle illustrant l'invention est préparée avec la composition suivante:
□ 35 parts en poids de résine EBA (MFI=1 g/10min., 7% butyl-acrylate)
□ 30 parts en poids de résine EVA (MFI=2 g/10min., 18% Vinyl-acétate);
□ 35 parts en poids de polyéthylène chloré **TYRIN 3611 P** (DuPont Dow Elastomères Plaquemine (US), 36% chlore, viscosité 800 Pa.s)
□ 2.2 parts en poids d'un masterbatch antistatiques à 70% de glycérol monostéarate ATMER 122 (ICI) dans 30% d'EVA;
□ 0.2 parts en poids de masterbatch de couleur noire.

La mousse est extrudée à travers la filière rectangulaire de l'exemple comparatif N°1, à 10kg/h de débit de polymères, avec 1.08 kg d'isobutane /h. La température de la masse polymère + gaz à la sortie du cylindre est de 101.1°C et la mousse passe dans un anneau soufflant de l'air, placé directement après la formation de la mousse à l'air libre, pour figer la surface extérieure de la mousse. La densité est de 29 kg/m³ et le profil est un rectangle de 13x8.2mm, comptant ± 600 cellules/cm². La mousse est à cellules ouvertes avec une peau extérieure et présente une souplesse très supérieure, non seulement du fait de la taille cellulaire plus fine en moyenne, mais surtout grâce à l'incorporation du CPE et la substitution du polyéthylène LDPE par le copolymère EBA. Les cellules sont remarquablement uniformes sur toute la section.

**Tableau 1:**

| Valeur de compression (N/mm²) suivant ISO 3386/1 et /2: | | | |
|---|---|---|---|
| Déformation imposée | 1 | 2 | 3 |
| 10% | 7643 | | 2667 |
| 20% | 12259 | 8342 | 4750 |
| 30% | 16161 | 11700 | 6583 |
| 40% | 19545 | | 7792 |
| 50% | 23866 | 19742 | 9458 |
| 60% | 32304 | | 13375 |

## Revendications

1. Mousse comprenant un mélange de:
a) 5 à 85% d'un homopolymère d'éthylène et/ou d'un copolymère fabriqué par un procédé à haute pression ; ou de leurs mélanges ;
b) de 5 à 85% d'un homopolymère d'éthylène et/ou d'un copolymère souple d'éthylène fabriqué par un procédé à haute pression ou de leurs mélanges, distinct(s) de celui (ceux) désigné(s) au point a) en ce qu'il(s) doit (doivent) avoir un point de fusion DSC inférieur d'au minimum 5°C à celui du (des) polymère(s) du point a)
c) de 5 à 85% de polyéthylène chloré possédant un taux de chlore allant de 10 à 60%.

2. Mousse selon la revendication 1, **caractérisée en ce que** le point de fusion DSC entre le(s) polymère(s) sous b) est inférieur d'au minimum 10°C à celui du (des) polymère(s) du point a)

3. Mousse selon la revendication 1 ou 2, **caractérisée en ce qu'**elle comprend de 10 à 50% de polyéthylène chloré et de préférence entre 20 à 40% de polyéthylène chloré.

4. Mousse selon l'une quelconque des revendications précédentes, **caractérisé en ce que** qu'elle comprend en outre entre 5 et 95 % de polyéthylène métallocène.

5. Mousse selon l'une quelconque des revendications précédentes, **caractérisé en ce qu'**elle comprend entre de 15 à 50% de polyéthylène métallocène.

6. Mousse selon la revendication 5 ou 6, caractérisé en ce le polyéthylène métallocène a une densité inférieure à 915 kg/m³.

7. Mousse selon l'une quelconque des revendications précédentes, **caractérisée en ce qu'**elle comprend entre 0.1 et 10% en poids d'agents nucléants.

8. Mousse selon l'une quelconque des revendications précédentes, **caractérisée en ce qu'**elle comprend en outre les additifs et adjuvants usuels, choisi dans le groupe constitué des agents de contrôle de stabilité dimensionnelle, des agents antistatiques, des pigments, des antioxydants, des antiUV, des lubrifiants, des agents antifeu, des pigments réflecteurs / absorbeurs d'infrarouges.

9. Procédé de moussage du mélange de polymères selon l'une quelconque des revendications précédentes, **caractérisé en ce qu'**il comprend les étapes suivantes:
a) dosage des constituants, prémélangés ou dosés individuellement, à l'alimentation d'une extrudeuse;
b) plastification et mélange des constituants à haute température pour fondre et homogénéiser les constituants;
c) injection d'un gaz de moussage;
d) homogénéisation des constituants et du gaz;
e) refroidissement de la masse;
f) extrusion à l'air libre à travers une filière, contrôlée en température, ayant une section de forme prédéfinie, provoquant la formation de la mousse;
g) refroidissement, étirage et guidage de la mousse ainsi formée.

10. Procédé de moussage selon la revendication 9, **caractérisé en ce que** pendant l'étape g), la mousse est pincée.
